# EUROPEAN PATENT APPLICATION

(11) **EP 1 840 602 A1**
(43) Date of publication of application: **03.10.2007**
(21) Application number: 07251330.2
(22) Date of filing: 28.03.2007
(51) Int. Cl.: G02B 5/22, G03B 21/62, G02B 3/00

(54) **Filter, plasma display device including the same and method of manufacturing the filter**

(30) Priority: 28.03.2006 KR 20060028134; 28.03.2006 KR 20060028135
(71) Applicant: Samsung SDI Co., Ltd., Suwon-si, Gyeonggi-do 442-390 (KR)
(72) Inventor: Cha, Jun-Kyu, Suwon-si Gyeonggi-do (KR); Bae, Jae-Woo, Suwon-si Gyeonggi-do (KR); Moon, Dong-Gun, Suwon-si Gyeonggi-do (KR); Hur, Sang-Yeol, Suwon-si Gyeonggi-do (KR); Oh, Wan-Seog, Suwon-si Gyeonggi-do (KR)
(74) Representative: Mounteney, Simon James

(57) **Abstract**

A filter including a base film, a plurality of light absorption units spaced apart from one another at regular intervals in the base film, and a focusing layer on the base film. The focusing layer may include a plurality of longitudinal crests or microlenses aligned with the light absorption units.

## Description

### BACKGROUND OF THE INVENTION

### 1. Field of the Invention

The present invention relates to a filter, a plasma display device including the same and a method of manufacturing the filter. In particular, the present invention relates to a filter capable of improving internal light luminance, while minimizing external light reflection.

### 2. Description of the Related Art

In general, plasma display devices are flat panel display devices that are capable of displaying images using a gas discharge phenomenon, thereby providing superior display characteristics, such as high luminance and contrast, lack of residual image, wide viewing angles, and a thin display structure as compared to conventional display devices.

The conventional plasma display device may include a filter with a plurality of thin layers. The conventional filter may be attached to a front substrate of the plasma display device to control light transmittance and, thereby, improve image quality and clarity of the plasma display device. The conventional filter may include a tempered glass filter formed to a uniform thickness of about 3 mm of a different material than the front substrate of the plasma display device.

However, the thickness of the tempered glass filter may significantly increase the weight and manufacturing costs of the conventional plasma display device. More importantly, the difference in materials employed to form the tempered glass filter and the front substrate of the plasma display device may generate a dual reflection due to refraction, thereby decreasing the image quality of the plasma display device. Additionally, the conventional tempered glass filter may exhibit insufficient bright room contrast and include a complex manufacturing method due to a complicated structure, i.e., combined filters performing various functions, thereof.

Accordingly, there exists a need to provide a filter for a plasma display device capable of increasing luminance and bright room contrast, while minimizing light reflection.

### SUMMARY OF THE INVENTION

The present invention is therefore directed to a filter and a plasma display device which substantially overcome one or more of the disadvantages of the related art.

It is therefore an object of the present invention to provide a filter capable of improving luminance and bright room contrast, while minimizing light reflection.

It is another object of the present invention to provide a filter having reduced weight.

It is yet another object of the present invention to provide a filter having a simplified structure compatible with low cost manufacturing.

It is still another object of the present invention to provide a plasma display device having a filter exhibiting one or more of the above features.

It is yet another object of the present invention to provide a method of manufacturing a filter exhibiting one or more of the above features.

At least one of the above and other features and advantages of the present invention may be realized by providing a filter, including a base film, a plurality of light absorption units spaced apart from one another at regular intervals in the base film, and a focusing layer on the base film, the focusing layer having a front surface with a plurality of convex shapes.

The light absorption units may have a width that is about 0.1 to about 3.0 times a height thereof. Each light absorption unit may correspond to a center of a respective convex shape of the focusing layer. A front surface of each light absorption unit may be in communication with the focusing layer. The base film may include stains or pigments.

The convex shapes of the focusing layer may be longitudinal crests. Alternatively, the convex shapes of the focusing layer may be hemispheres.

The filter may further include an antireflection layer. The antireflection layer may include a hard coating material. Alternatively, filter may include a hard coating layer on the antireflection layer. The filter may additionally include an electromagnetic wave shield layer, at least one adhesive layer, a near infrared ray blocking layer, a color correction layer, or a combination thereof.

In another aspect of the present invention, there is provided a plasma display device, including a plasma display panel, a chassis on a rear surface of the plasma display panel, at least one driving circuit board on a rear surface of the chassis base and electrically connected to the plasma display panel, and a filter on a front panel of the plasma display panel, wherein the filter includes a base film, a plurality of light absorption units spaced apart from one another at regular intervals in the base film; and a focusing layer on the base film, the focusing layer having a front surface with a plurality of convex shapes. The convex shapes of the focusing layer may be longitudinal crests. Alternatively, the convex shapes of the focusing layer may be hemispheres.

In yet another aspect of the present invention, there is provided a method of manufacturing a filter, including depositing a photoresist layer on a substrate having electrical conductivity, forming coating patterns in the photoresist layer, depositing a metal layer in the coating patterns, removing the photoresist layer, oxidizing the metal layer to form light absorption units, adhering a focusing layer with a plurality of visible ray focusing units to the light absorption units, separating the light absorption units from the substrate, and forming a base film layer in communication with the light absorption units and with a rear surface of the focusing layer.

Forming coating patterns may include partially exposing the photoresist layer. Forming the coating patterns may include forming stripe-shaped grooves spaced apart from each other at regular intervals on the photoresist layer. Alternatively, forming the coating patterns may include forming vertical slits with a predetermined diameter, the vertical slits being spaced apart from each other at regular intervals on the photoresist layer.

Depositing the metal layer may include employing copper. Oxidizing the metal layer may include immersing the metal layer in an alkaline solution.

The visible ray focusing units may be formed at regular intervals of an upper surface of the focusing layer by melting and pressing a transparent resin in a mold or by extruding a heated resin in an embossing roll mold. The visible ray focusing units may be formed as longitudinal crests. The visible ray focusing units may be formed as a plurality of microlenses. Adhering the focusing layer to the light absorption units may include depositing an adhesive layer therebetween. Adhering the focusing layer to the light absorption units may include adhering each light absorption unit to a center of a respective visible ray focusing unit.

The method may further include depositing stains or pigments in the base film. Additionally, the method may include forming an antireflection layer, an electromagnetic wave shield layer, an adhesive layer, a near infrared ray blocking layer, a color correction layer, or a combination thereof.

### BRIEF DESCRIPTION OF THE DRAWINGS

Embodiments of the invention will now be described by way of example and with reference to the accompanying drawings in which:-
FIG. 1 illustrates a partial perspective view of a filter according to an embodiment of the present invention;
FIG. 2 illustrates a cross-sectional view along line II-II in FIG. 1;
FIG. 3 illustrates a partial perspective view of a filter according to another embodiment of the present invention;
FIG. 4 illustrates a cross-sectional view along line IV-IV in FIG. 3;
FIG. 5 illustrates a cross-sectional view of an optical mechanism of a filter according to an embodiment of the present invention;
FIG. 6 illustrates a cross-sectional view of a filter according to another embodiment of the present invention;
FIG. 7 illustrates a perspective exploded view of a plasma display device having a filter according to an embodiment of the present invention;
FIG. 8 illustrates a cross-sectional view along line IIIV -IIIV in FIG. 7; and
FIGS. 9-16 illustrate cross-sectional views of sequential steps during manufacturing of a filter according to an embodiment of the present invention.

### DETAILED DESCRIPTION OF THE INVENTION

The present invention will now be described more fully hereinafter with reference to the accompanying drawings, in which embodiments of the invention are illustrated. The invention may, however, be embodied in different forms and should not be construed as limited to the embodiments set forth herein. Rather, these embodiments are provided so that this disclosure will be thorough and complete, and will fully convey the scope of the invention to those skilled in the art.

In the figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

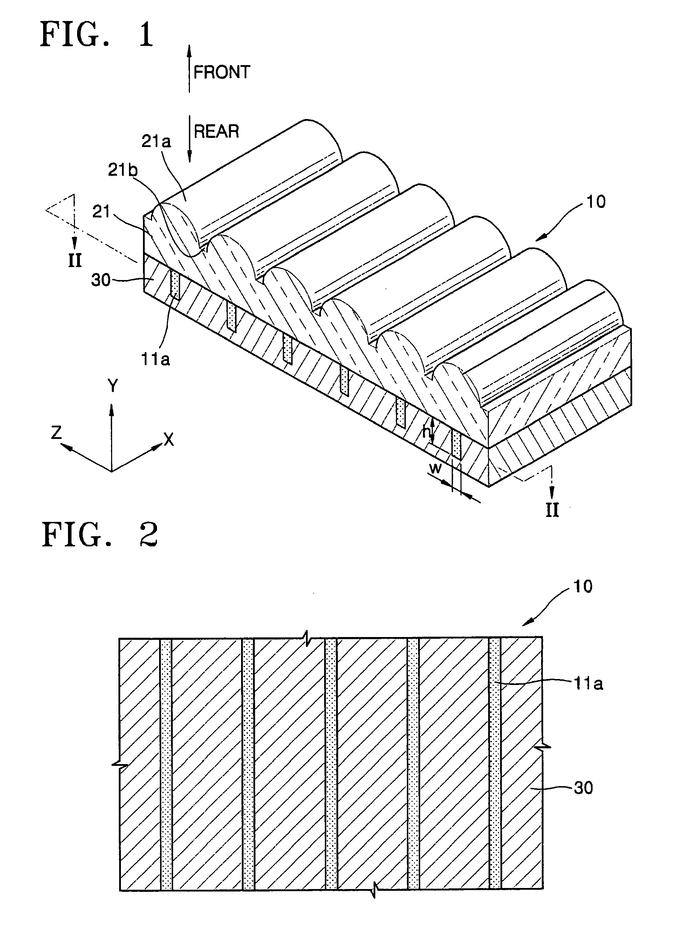

An embodiment of a filter according to the present invention may be mounted on a front panel of a plasma display device (PDP) and will be described in detail below with reference to FIGS. 1-2. As illustrated in FIG. 1, the filter 10 includes a base film 30, a plurality of light absorption units 11a, and a focusing layer 21.

The base film 30 of the filter 10 has a planar shape, e.g., plate-shaped. The base film 30 is flexible and has a thickness of about 50 µm to about 500 µm. Preferably, the thickness of the base film 30 is about 80 µm to about 400 µm. A thickness of below about 50 µm may provide insufficient impact and scattering protection to the PDP. A thickness of above about 500 µm may reduce lamination efficiency.

A rear surface of the base film 30 is attached to a front panel of a PDP. In this respect, it should be noted that "rear" and "front" as used herein with respect to orientation of elements refer to surfaces of elements that are positioned further and closer, respectively, to the exterior, i.e., a distance as measured with respect to a person watching the PDP, as illustrated in FIG. 1. The base film 30 may be made of any flexible, transparent material capable of transmitting visible light and adhering to glass or plastic, e.g., polyethersulphone (PES), polyacrylate (PAR), polyetherimide (PEI), polyethylene naphthalate (PEN), polyethylene terephthalate (PET), polyphenylene sulfide (PPS), polyallylate, polyimide, polycarbonate (PC), cellulose triacetate (TAC), cellulose acetate propionate (CAP), and so forth. Preferably PC, PET, TAC and PEN may be used. The base film 30 may also include a material capable of shielding near infrared or neon light.

The base film 30 may also include a material for color correction. The base film 30 may have a predetermined color to facilitate control of light transmittance through the filter 10, i.e., control via color adjustment of the base film 30. For example, formation of the base film 30 of a dark color may reduce light transmittance through the filter 10. The color of the base film 30 may be formed to correspond to a pattern of each sub-pixel of a PDP having a filter according to an embodiment of the present invention.

The light absorption units 11a of the filter 10 are perpendicularly on the front surface of the base film 30 and spaced apart from one another at substantially regular intervals, as illustrated in FIGS. 1-2. In particular, the light absorption units 11a are positioned in a longitudinal pattern along an x-axis, such that front surfaces of the light absorption units 11a and the front surface of the base film 30 are aligned, i.e., form a single uniform surface. The light absorption units 11 a may be formed of a dark material exhibiting high light absorption to increase light absorption therein.

The light absorption units 11a have a width w, i.e., a distance as measured along a z-axis, that equals about 0.1 to about 3.0 times a height h, i.e., a distance as measured along a y-axis, thereof. A width w of the light absorption units 11a that is smaller than about 0.1 times the height h thereof may provide insufficient absorption of external light, thereby increasing light reflection. A width w of the light absorption units 11 a that is larger than about 3.0 times the height h thereof may provide excessive absorption of internal light emitted from the PDP, thereby minimizing brightness.

The focusing layer 21 of the filter 10 is disposed on the front surface of the base film 30 and in communication with the light absorption units 11a, such that the base film 30 can be positioned between the front substrate of the PDP and the focusing layer 21. The focusing layer 21 may be made of a material capable of transmitting visible light, e.g., by pressing a fused epoxy resin in a mold, by heating an epoxy resin in an extruder and then pressing it in an embossing roll, by exposing an epoxy resin to ultraviolet rays and partially curing it, and so forth.

The focusing layer 21 is formed to have a lenticular structure. The lenticular structure includes a plurality of longitudinal crests 21 a having semicircular cross-sections in the yz-plane and rectangular cross-sections in the xz and xy planes, as illustrated in FIG. 1. The longitudinal crests 21a are arranged in a single layer and spaced at regular intervals from one another. A plurality of channels 21b are formed between the longitudinal crests 21a, i.e., one channel 21b is formed between every two longitudinal crests 21a, such that the lengths, (i.e., a distance as measured along an x-axis), of the channels 21b, the longitudinal crests 21a, and the base film 30 are equal. The width of each channel 21b is substantially shorter than the width of each longitudinal crest 21a, as illustrated in FIG. 1. The longitudinal crests 21a of the focusing layer 21 are formed in a front surface thereof, such that a rear surface of the focusing layer 21 is uniformly flat and in communication with the base film 30 and the light absorption units 11a, as further illustrated in FIG. 1. The light absorption units 11a are aligned, i.e., on a same vertical axis, with respective centers of the semicircular cross sections of the focusing layer 21.

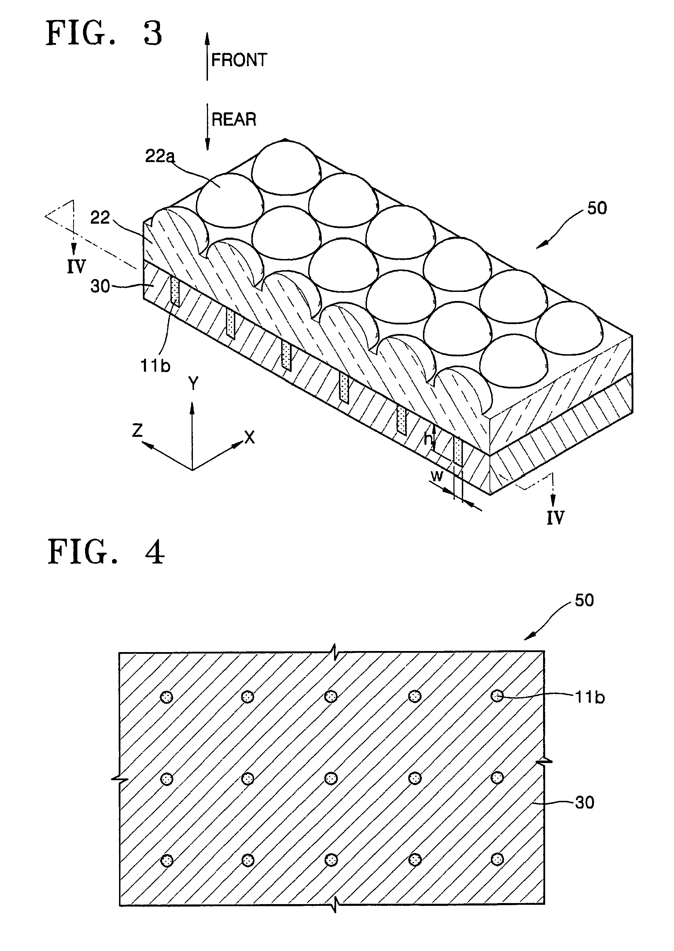

According to another embodiment of the present invention, a filter 50, illustrated in FIGS. 3-4, includes a base film 30, a plurality of light absorption units 11b, and a focusing layer 22.

The base film 30 of the filter 50 is generally the same as the base film 30 of the filter 10 as previously described with respect to FIGS. 1-2, and therefore, will not be described in detail herein.

The light absorption units 11b of the filter 50 are positioned in the front surface of the base film 30 and spaced apart from one another at substantially regular intervals. In particular, as illustrated in FIGS. 3-4, the light absorption units 11b are formed as vertical, i.e., along the y-axis, bars with a predetermined diameter in the base film 30, such that front surfaces of the light absorption units 11b and the front surface of the base film 30 are aligned, i.e., form a uniform surface. The light absorption units 11b are formed of a dark material, exhibiting high light absorption to increase light absorption therein.

The light absorption units 11b have a width that equals about 0.1 to about 3.0 times a height thereof. A width of the light absorption units 11b that is smaller than about 0.1 times the height thereof may provide insufficient absorption of external light, thereby increasing light reflection. A width of the light absorption units 11b that is larger than about 3.0 times the height thereof may provide excessive absorption of internal light emitted from the PDP, thereby minimizing brightness.

The focusing layer 22 of the filter 50 is disposed on the front surface of the base film 30 and in communication with the light absorption units 11b, such that the base film 30 can be positioned between the front substrate of the PDP and the focusing layer 22. The focusing layer 22 may be made of a material capable of transmitting visible light, e.g., by pressing a fused epoxy resin in a mold, by heating an epoxy resin in an extruder and then pressing it in an embossing roll, by exposing an epoxy resin to ultraviolet rays and partially curing, and so forth.

The focusing layer 22 includes a plurality of microlenses 22a shaped as hemispherical convex protrusions, each microlens having a semicircular cross-section in the yz and xy planes and a circular cross-section in the xz-plane, as illustrated in FIG. 3. The microlenses 22a are arranged in a predetermined pattern, e.g., a matrix, such that the space 22b between every two microlenses 22a is smaller than the width of each microlens 22a, as illustrated in FIG. 3. The microlenses 22a of the focusing layer 22 are formed in a front surface thereof, such that a rear surface of the focusing layer 22 may be uniformly flat and in communication with the base film 30 and the light absorption units 11b, as further illustrated in FIG. 3. The light absorption units 11b are aligned, i.e., on a same vertical axis, with respective centers of the microlenses 22a of the focusing layer 22.

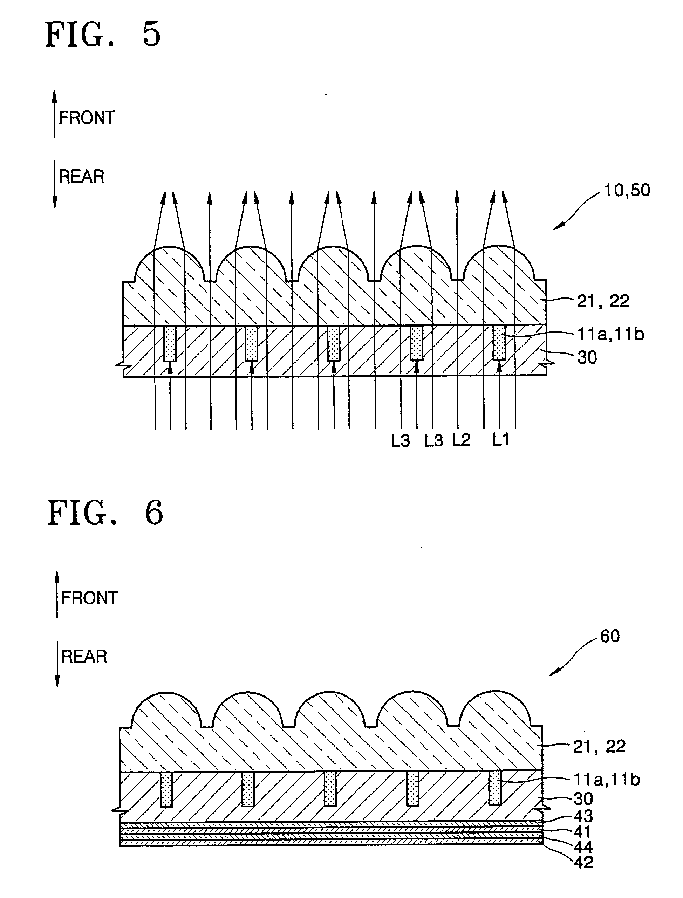

The optical mechanism of a filter according to an embodiment of the present invention, i.e., the light reflection and transmittance therethrough, will be described below in greater detail with respect to FIG. 5. It should be noted that in the explanation below, "filter" may refer to either the filter 10 or the filter 50 described previously with respect to FIGS. 1-4 or some other filter according to the invention. Similarly, "light absorption units" may refer to light absorption units 11a or 11b, while a "focusing layer" may refer to focusing layer 21 or focusing layer 22 or, in each case, the described compact could be part of a different embodiment.

Light generated in the PDP and emitted therefrom is projected from the front panel of the PDP toward the base film 30 of the filter. A first portion L1 of the projected light is incident on the light absorption units and, thereby, absorbed therein. Second and third portions L2 and L3 of the projected light are transmitted through the base film 30 toward the focusing layer. At an interface between the focusing layer and an exterior, the second portion L2 of the projected light is incident on a surface parallel to the base film 30 and, thereby, emerges from the filter perpendicularly to the focusing layer. The third portion L3 of the projected light is incident on a surface not parallel to the base film 30, i.e., a longitudinal crest 21a or a microlens 22a and, thereby, refracted and focused in a predetermined direction. As illustrated in FIG. 5, a plurality of light beams projected from the PDP through one longitudinal crest 21a or one microlens 22a are focused in one direction that overlaps with a center axis along a vertical direction of a respective longitudinal crest 21a or microlens 22a and with a center axis along a vertical direction of a respective light absorption unit. On the other hand, external light (not shown) incident on a front surface of the filter, i.e., either the longitudinal crests 21a or the microlenses 22a of the focusing layer, is diffused by the focusing layer. A portion of the external light is transmitted through the focusing layer and absorbed by the light absorption units.

According to another embodiment of the present invention, a filter 60, illustrated in FIG. 6, is similar to either the filter 10 described previously with respect to FIGS. 1-2 or to the filter 50 described previously with respect to FIGS. 3-4, with the exception that the filter 60 additionally includes a plurality of functional layers deposited on the filter 60. In particular, the filter 60 includes an electromagnetic wave shield layer 41 and an antireflection layer 42. The electromagnetic wave shield layer 41 and the antireflection layer 42 are deposited either on the front of the filter 60 or on the rear of the filter 60, as illustrated in FIG. 6.

The electromagnetic wave shield layer 41 is formed by depositing at least one metal layer on a metal oxide layer, so that the metal oxide layer minimizes oxidation or degradation of the metal layer. Alternatively, the electromagnetic wave shield layer 41 is formed of multiple layers, e.g., about five to eleven layers, in order to adjust surface resistance and control transmittance of visible light. In yet another alternative, the electromagnetic wave shield layer 41 is formed as a conductive metal mesh. The electromagnetic wave shield layer 41 serves to provide a shield from harmful electromagnetic waves and near infrared light generated by a PDP having the filter 60, thereby reducing a potential risk to human health and decreasing malfunctioning of peripheral electronic equipment.

The metal layer of the electromagnetic wave shield layer 41 may include palladium, copper, platinum, rhodium, aluminum, iron, cobalt, nickel, zinc, ruthenium, tin, tungsten, iridium, lead, silver, or a combination thereof. The metal oxide layer of the electromagnetic wave shield layer 41 may include tin oxide, indium oxide, antimony oxide, zinc oxide, zirconium oxide, titanium oxide, magnesium oxide, silicon oxide, aluminum oxide, metal alkoxide, indium tin oxide, or antimony tin oxide. The electromagnetic wave shield layer 41 may be formed by sputtering, vacuum deposition, ion plating, chemical vapor deposition (CVD), physical vapor deposition (PVD), or a like method on the filter, e.g., on the rear surface of the base film 30. The electromagnetic wave shielding layer 41 may be formed after a film layer 43 is formed on the rear surface of the base film 30 of FIG. 6, i.e., the film layer 43 may be interposed between the electromagnetic wave shielding layer 43 and the base film 30.

The antireflection layer 42 serves to diffuse incident light on the surface of the filter 60 and minimize light reflection. In this respect, it should be noted that an antireflection layer may not be formed in a conventional tempered glass filter because a gap between a front panel of the PDP and a rear surface of the conventional tempered glass filter tends to decrease image resolution. However, the filter 60 according to the present invention is advantageous because of the capability of attaching or adhering the filter 60 directly to the front panel of a display device and, thereby, maintaining proper image resolution and facilitating use of the antireflection layer 42.

The antireflection layer 42 may include a hard coating material to minimize damage due to external impact, e.g., scratching. Alternatively, a hard coating film (not shown) may be formed as a separate layer on the antireflection layer 42. The hard coating material may include a polymer functioning as a binder. For example, the polymer binder may include acrylate, urethane, epoxy, a siloxane polymer, or a UV curing resin, e.g., an oligomer. Additionally, a filler, e.g., silica, may be added into the hard coating material to increase the hardness thereof.

The antireflection layer 42 may be deposited on the base film 30 of the filter 60 to a thickness of about 2.0 µm to about 7.0 µm and exhibit a pencil hardness of about 2H to about 3H.

The filter 60 further includes an adhesive layer 44. The adhesive layer 44 is formed between the electromagnetic wave shield layer 41 and the antireflection layer 42 to improve adhesion therebetween. The adhesive layer 44 may be formed of a thermoplastic, UV curing resin, e.g., an acrylate resin or a pressure sensitive adhesive, by dip-coating, air knife coating, roller coating, wire bar coating, gravure coating, and so forth. The adhesive layer 44 may further include a compound to absorb near infrared rays, e.g., a copper-based compound, a phosphorus-based compound, a THIO urea derivative, a tungsten-based compound, and a cyanine-based compound. Additionally, the adhesive layer 44 may include a coloring material, i.e., stains or pigments for color correction by blocking neon light, capable of absorbing light at about 400 nm to about 700 nm, such as cyanine, squarylium, azomethine, xanthene, oxonol, and azo compounds. The coloring materials may be included in the adhesive layer 44 in a form of dispersed corpuscles.

An additional adhesive layer (not shown) may be formed on the antireflection layer 42, i.e., as an external layer on a rear side of the filter 60, in order to provide enhanced adhesion between the filter 60 and the front of the PDP. The additional adhesive layer may be similar to the adhesive layer 44. In this respect, it should be noted that a difference between refractive indices of the additional adhesive layer and the display panel may not exceed a predetermined amount, e.g., about 0.1%, in order to reduce double reflection.

The filter 60 may further include a near infrared light blocking layer (not shown) and/or a color correction layer (not shown). The electromagnetic wave shield layer 41, the adhesive layer 44, and the additional adhesive layer may be capable of blocking near infrared light. However, an additional layer for blocking near infrared light can provide an enhanced protection. The color correction layer may be used when visible light emitted from a display device including a filter according to an embodiment the present invention may have low color purity or may require adjustment of color temperature.

The filter 60 may exhibit light transmittance above about 30.0% and haze of less than about 5.0%.

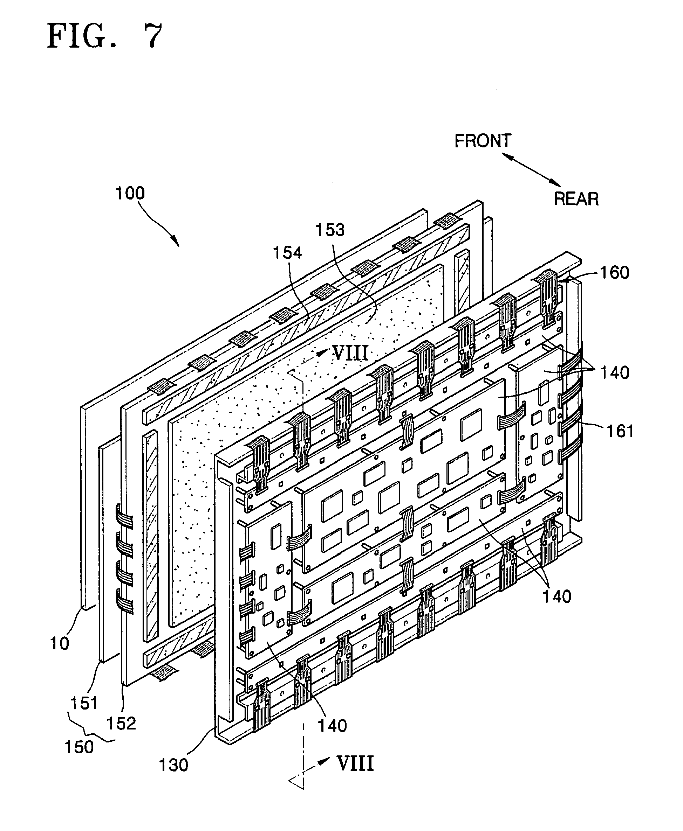

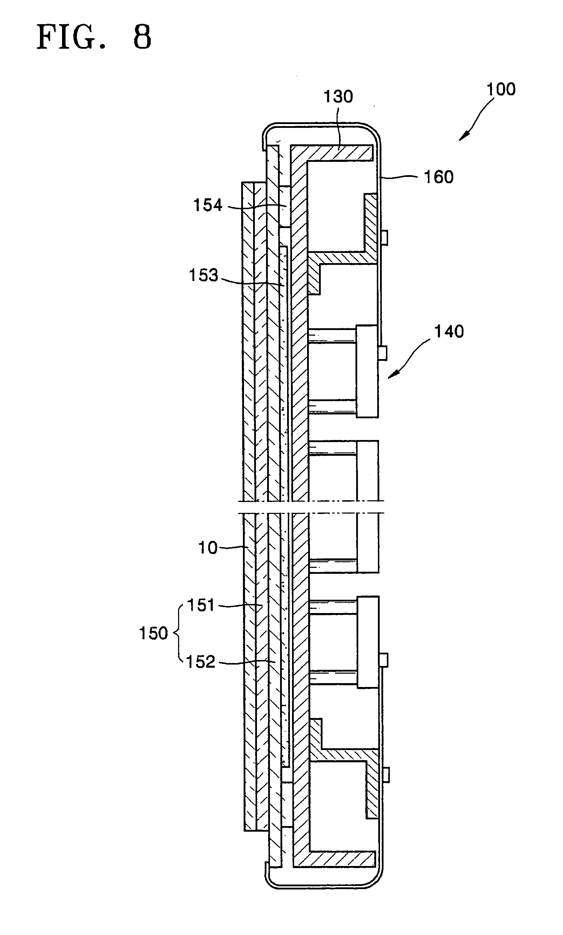

According to yet another embodiment of the present invention, a plasma display device 100, illustrated in FIGS. 7-8, includes the filter 10 as described previously with respect to FIGS. 1-3. In particular, the plasma display device 100 includes a PDP 150 with a front panel 151 and a rear panel 152 attached to one another, a chassis 130, a plurality of driving circuit boards 140, and the filter 10. It should be noted, however, that even though the plasma display device 100 is described in connection with the filter 10, other types of filters, e.g., the filter 50 and the filter 60, are not excluded from the scope of the present invention.

The filter 10 may be attached to the front panel 151 of the PDP via an adhesive layer (not shown). Attachment of the filter 10 to the PDP 150 serves to reduce electromagnetic waves and infrared light generated by the PDP and substantially decrease double reflection of images therein. Additionally, employing the filter assembly 10 in the PDP 150 may reduce weight and manufacturing costs as compared to a conventional PDP with a tempered glass filter.

The chassis 130 is attached to the rear panel 152 of the PDP 150 via an adhesive means, e.g., a double-sided tape 154, to provide structural support thereto. The chassis 130 may be formed of a rigid metal, e.g., aluminum, iron, or a like metal, or of plastic. A thermally conductive material 153 is disposed between the chassis 130 and the PDP 150 in order to diffuse heat generated by the PDP 150.

The driving circuit boards 140 are disposed on a rear surface of the chassis 130, i.e., such that the chassis 130 may be positioned between the PDP 150 and the circuit boards 140, to drive the PDP 150. In particular, the driving circuit boards 140 transfer electrical signals to the PDP 150 by any suitable signal transmission means as determined by one of ordinary skill in the art, e.g., a flexible printed cable (FPC), a tape carrier package (TCP), a chip on film (COF), and so forth. In this particular embodiment, the plasma display device 100 includes a plurality of FPCs 161 disposed at each vertical side of the chassis 130 and a plurality of TCPs 160 disposed at each horizontal side, i.e., an upper portion and a lower portion, of the chassis 130 as a signal transmission means.

In the above description, a plasma display device is described as an example of a display device employing a filter according to an embodiment of the present invention. However, other display devices are not excluded from the scope of the present invention.

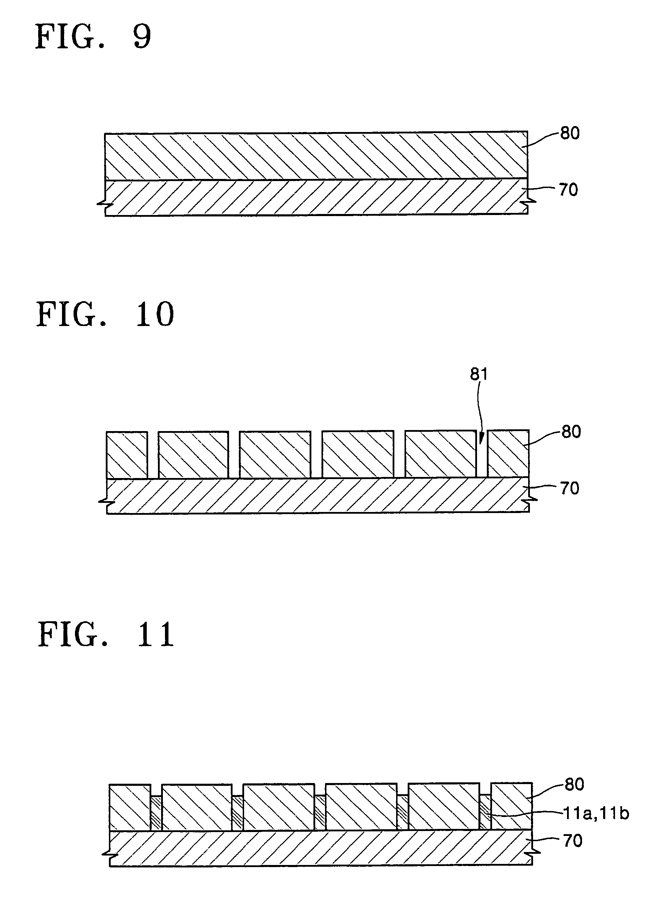

As illustrated in FIGS. 9-16, a method of manufacturing a filter according to an embodiment of the present invention is as follows.

First, a photoresist layer 80 is formed on a metal substrate 70, as illustrated in FIG. 9. Next, the photoresist layer 80 undergoes partial exposing and developing to form coating patterns 81 therein, as illustrated in FIG. 10, having a width that equals about 0.1 to about 3.0 times a height thereof. In this respect, it should be noted that, if the focusing layer of the filter is to include a lenticular structure, the coating patterns 81 are formed as stripe-shaped grooves spaced at equal intervals from one another. Alternatively, if the focusing layer of the filter is to include a plurality of microlenses, the coating patterns 81 are formed as vertical slits having a predetermined diameter and spaced at equal intervals from one another.

Subsequently, as illustrated in FIG. 11, a metal layer exhibiting a high light absorption, e.g., copper, is deposited in the coating patterns 81, i.e., between portions of the photoresist layer 80, to form a plurality of light absorption units 11a or 11b. The metal layer formed, i.e., the plurality of light absorption units 11a or 11b, may have a higher slenderness ratio than a metal layer formed by a thin film method.

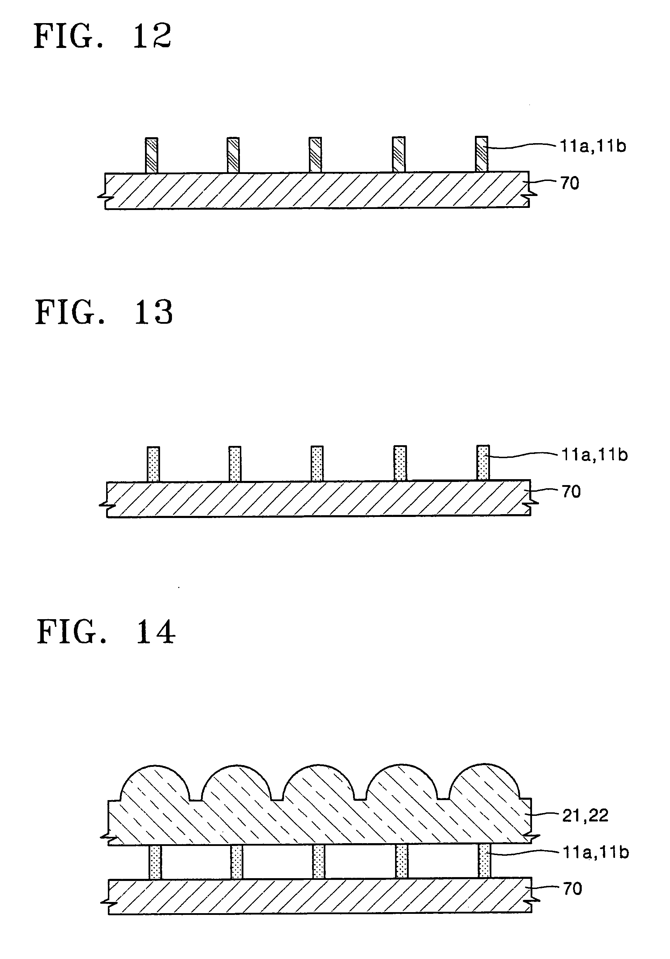

Next, the photoresist layer 80 is removed, as illustrated in FIG. 12. The plurality of light absorption units 11a or 11b are oxidized to apply a dark color thereto, as illustrated in FIG. 13, via, e.g., immersing the plurality of light absorption units 11a or 11b in an alkaline solution.

Next, a focusing layer is adhered to the metal layer, as illustrated in FIG. 14, by depositing an adhesive layer therebetween. The focusing layer is then treated to form visible ray focusing units therein. In other words, a plurality of longitudinal crests or microlenses are formed at regular intervals in an upper surface of the focusing layer by melting and pressing a transparent resin in a mold or by extruding a heated resin in an embossing roll mold.

The visible ray focusing units, i.e., the plurality of longitudinal crests or microlenses of the focusing layer, are formed such that curved portions thereof may be in communication with the exterior. Further, the visible ray focusing units are formed to correspond to respective light absorption units 11a or 11b. More specifically, if the focusing layer includes a lenticular structure, each light absorption unit 11a corresponds to a respective center of a longitudinal crest 21a. Alternatively, if the focusing layer includes a plurality of microlenses 22a, each light absorption unit 11b corresponds to a respective center of a microlens 22a.

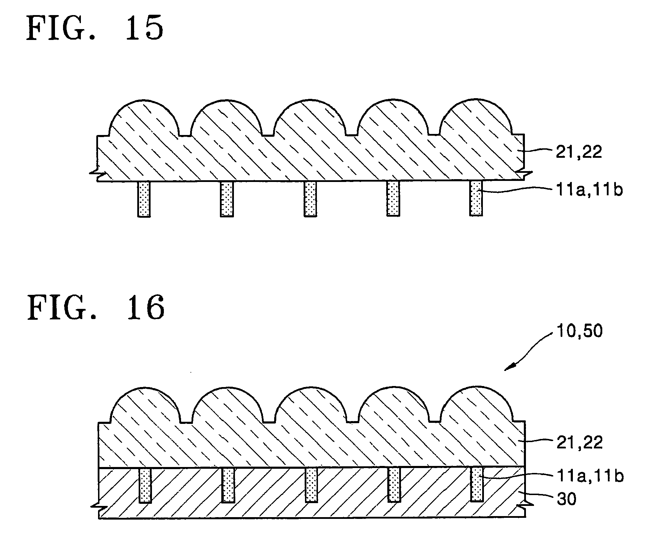

Next, the substrate 70 is separated from the light absorption units 11a or 11b, as illustrated in FIG. 15. Subsequently, a base film 30 is formed in communication with the rear surface of the focusing layer and the light absorption units 11a or 11b, as illustrated in FIG. 16, in order to complete formation of the filter 10 or 50.

In this respect, it should be noted that the method of manufacturing a filter, as described above with respect to FIGS. 9-16, may correspond to formation of the filters 10 and 50 illustrated in FIGS. 1-4. However, formation of the filter 60 illustrated in FIG. 6 may further include addition of stains or pigments into the base film 30 to facilitate color control and light transmittance and deposition of an antireflection layer, an electromagnetic wave shield layer, a near infrared ray blocking layer, a color correction layer, or a combination thereof.

In the filter and the plasma display device including the same according to an embodiment of the present invention the filter may be attached directly to a front panel of the PDP, thereby reducing double reflection and enhancing luminance thereof. In particular, external light reflection may be reduced due to use of dark light absorption units, thereby further improving bright room contrast. Luminance may be enhanced due to use of a focusing layer capable of focusing visible light emitted from the PDP into one direction. Additionally, the filter may be formed using a relatively thin base film, thereby decreasing its overall weight and enhancing transmittance therethrough.

In a method of manufacturing the filter according to an embodiment of the present invention, a filter having improved bright room contrast and reduced double reflection may be manufactured at a reduced cost due to simplified structure thereof.

Embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A filter, comprising:
a base film;
a plurality of light absorption units spaced apart from one another at regular intervals in the base film; and
a focusing layer on the base film, the focusing layer having a front surface with a plurality of convex shapes.

2. A filter as claimed in claim 1, wherein the light absorption units have a width that is from 0.1 to 3.0 times a height thereof.

3. A filter as claimed in claim 1 or 2, wherein each light absorption unit corresponds to a center of a respective convex shape of the focusing layer.

4. A filter as claimed in any preceding claim, wherein a front surface of each light absorption unit is in communication with the focusing layer.

5. A filter as claimed in any preceding claim, wherein the convex shapes of the focusing layer are longitudinal crests.

6. A filter as claimed in any one of claims 1 to 4, wherein the convex shapes of the focusing layer are hemispheres.

7. A filter as claimed in any preceding claim, wherein the base film includes stains or pigments.

8. A filter as claimed in any preceding claim, further comprising an antireflection layer.

9. A filter as claimed in claim 8, wherein the antireflection layer includes a hard coating material.

10. A filter as claimed in claim 8, further comprising a hard coating layer on the antireflection layer.

11. A filter as claimed in any preceding claim, further comprising an electromagnetic wave shield layer, at least one adhesive layer, a near infrared ray blocking layer, a color correction layer, or a combination thereof.

12. A plasma display device, comprising:
a plasma display panel;
a chassis on a rear surface of the plasma display panel;
at least one driving circuit board on a rear surface of the chassis base and electrically connected to the plasma display panel; and
a filter on a front panel of the plasma display panel, wherein the filter is as set out in any preceding claim.

13. A method of manufacturing a filter, comprising:
depositing a photoresist layer on a substrate having electrical conductivity;
forming coating patterns in the photoresist layer;
depositing a metal layer in the coating patterns;
removing the photoresist layer;
oxidizing the metal layer to form light absorption units;
adhering a focusing layer with a plurality of visible ray focusing units to the light absorption units;
separating the light absorption units from the substrate; and
forming a base film layer in communication with the light absorption units and with a rear surface of the focusing layer.

14. A method as claimed in claim 13, wherein forming coating patterns includes partially exposing the photoresist layer.

15. A method as claimed in claim 13 or 14, wherein forming the coating patterns includes forming stripe-shaped grooves spaced apart from each other at regular intervals in the photoresist layer.

16. A method as claimed in claim 13 or 14, wherein forming the coating patterns includes forming vertical slits with a predetermined diameter, the vertical slits being spaced apart from each other at regular intervals on the photoresist layer.

17. A method as claimed in one of claims 13 to 16, wherein depositing the metal layer includes depositing a copper layer.

18. A method as claimed in one of claims 13 to 17, wherein oxidizing the metal layer includes immersing the metal layer in an alkaline solution.

19. A method as claimed in one of claims 13 to 18, wherein the visible ray focusing units are formed at regular intervals of an upper surface of the focusing layer by melting and pressing a transparent resin in a mold or by extruding a heated resin in an embossing roll mold.

20. A method as claimed in claim 19, wherein the visible ray focusing units are formed as longitudinal crests.

21. A method as claimed in claim 19, wherein the visible ray focusing units are formed as a plurality of microlenses.

22. A method as claimed in one of Claims 13 to 21, wherein adhering the focusing layer to the light absorption units includes depositing an adhesive layer therebetween.

23. A method as claimed in one of claims 13 to 22, wherein adhering the focusing layer to the light absorption units includes adhering each light absorption unit to a center of a respective visible ray focusing unit.

24. The method as claimed in one of claims 13 to 23, further comprising depositing stains or pigments in the base film.

25. The method as claimed in one of claims 13 to 24, further comprising forming an antireflection layer, an electromagnetic wave shield layer, a adhesive layer, a near infrared ray blocking layer, a color correction layer, or a combination thereof on the filter.
